# EUROPEAN PATENT SPECIFICATION

(11) **EP 1 231 550 B1**
(45) Date of publication and mention of the grant of the patent: **20.08.2008**
(21) Application number: 02394016.6
(22) Date of filing: 30.01.2002
(51) Int. Cl.: G06F 17/30

(54) **Real time transaction processing**
Echtzeittransaktionsverarbeitung
Traitement transactionnel en temps réel

(30) Priority: 31.01.2001 IE 20010074
(43) Date of publication of application: 14.08.2002
(73) Proprietor: KBS Solutions Limited, Dublin 2 (IE)
(72) Inventor: Campbell, Michael, Drogheda, County Louth (IE); O'Hara, David, Malahide, County Dublin (IE); Corbin, Jon, Dublin 16 (IE); Crowe, Gary, Dunshaughlin, County Meath (IE)
(74) Representative: Weldon, Michael James

(56) References cited:
- US-A- 5 151 988
- GRAY, JIM, REUTER, ANDREAS: "Transaction processing: concepts and techniques (excerpt)" 1993, MORGAN KAUFMANN , USA , XP002322153 pages 373-445 * page 397, paragraph 3 - page 402, paragraph 1 * * page 429, last paragraph - page 435, paragraph 4 *
- HÄRDER T ET AL: "Transaction processing systems in a workstation/server environment" INFORMATIK FORSCHUNG UND ENTWICKLUNG, vol. 5, no. 3, 1990, pages 127-143, XP002322152 GERMANY ISSN: 0178-3564
- BOBER P M ET AL: "On mixing queries and transactions via multiversion locking" DATA ENGINEERING, 1992. PROCEEDINGS. EIGHTH INTERNATIONAL CONFERENCE ON TEMPE, AZ, USA 2-3 FEB. 1992, LOS ALAMITOS, CA, USA,IEEE COMPUT. SOC, US, 2 February 1992 (1992-02-02), pages 535-545, XP010026768 ISBN: 0-8186-2545-7

## Description

### INTRODUCTION

### Field of the Invention

The invention relates to a real time transaction processing system of the type comprising:-
a client layer comprising a plurality of client computers programmed with a graphical user interface, with applications to execute data processing operations locally, and with functions to perform data manipulation operations in communication with a server;
a communications layer; and
a database server comprising stored database tables and database functions comprising means for communicating with the client computers.

### Prior Art Discussion

Heretofore, in such systems the client data manipulation functions include data aware controls for manipulation of data in a manner which is directly controlled by them.

Also, the database functions of the server are low-level functions such as SQL statements, which perform low-level data access operations under direct control of the client computer data aware controls. An example of such a system is disclosed in British Patent Specification No. GB2201270B (and corresponding US5151988). In this document, a journal merge key table stores transaction sequence information, and a lock manager communicates with other processors each time there is access to modify a selected record.

This approach simplifies the programming effort and allows the client computers to be quite powerful and effective at meeting the user requirements for a range of data processing activities and real time transaction processing. It also provides comprehensive and versatile user interfacing in a window environment.

The document GRAY, JIM, REUTER, ANDREAS: "Transaction processing: concepts and techniques (excerpt)" 1993, MORGAN KAUFMANN, USA describes concepts and techniques associated with transaction isolation.

However, concurrency problems for real time transaction processing arise where there are multiple client computers. These concurrency problems arise from uncoordinated many-to-one database access and record locking operations. This gives rise to frequent record locking conflicts in an environment with typically, over 50 client computers.

The invention is therefore directed towards providing a real time transaction processing system having the above-described benefits of powerful client computes without these concurrency problems.

### SUMMARY OF THE INVENTION

According to the invention, there is provided a real time transaction processing system as set out in claim 1:

In a further embodiment, each client computer comprises means for associating a unique primary key identifying a record to be updated, and for including said key in a call to a maintenance function for an update.

In one embodiment, each maintenance function comprises means for performing a record update in a single operation having an instruction specifying the update to be performed and an instruction setting a condition of ensuring tag values in the record match those received in the call from the call interface.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram illustrating architecture of a real-time transaction processing system of the invention; and
Fig. 2 is a flow diagram showing operation of the system in more detail.

### Description of the Embodiments

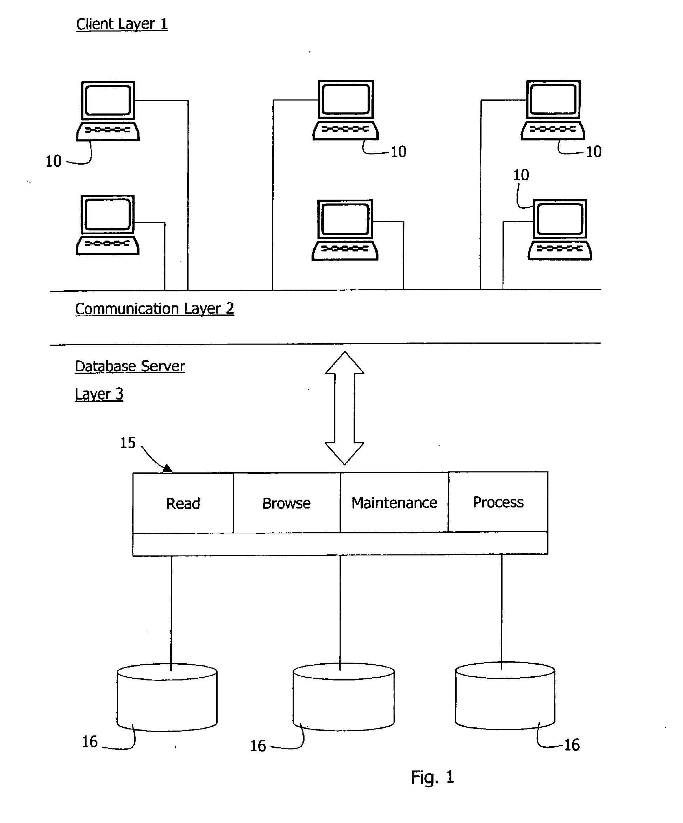

Referring to Fig. 1 a real time transaction processing system comprises a client layer 1, a communications layer 2, and a database server 3. The client layer 1 comprises in the range of 50 to 100 PC client computers 10 connected to the communication layer 2.

The communication layer 2 comprises an ODBC connection from the client computers 10 to the database server 3.

The database server 3 comprises database functions 15 grouped into read, browse, maintenance, and process categories. The functions 15 access relational transaction data tables 16 of 1 MB to 10 GB size.

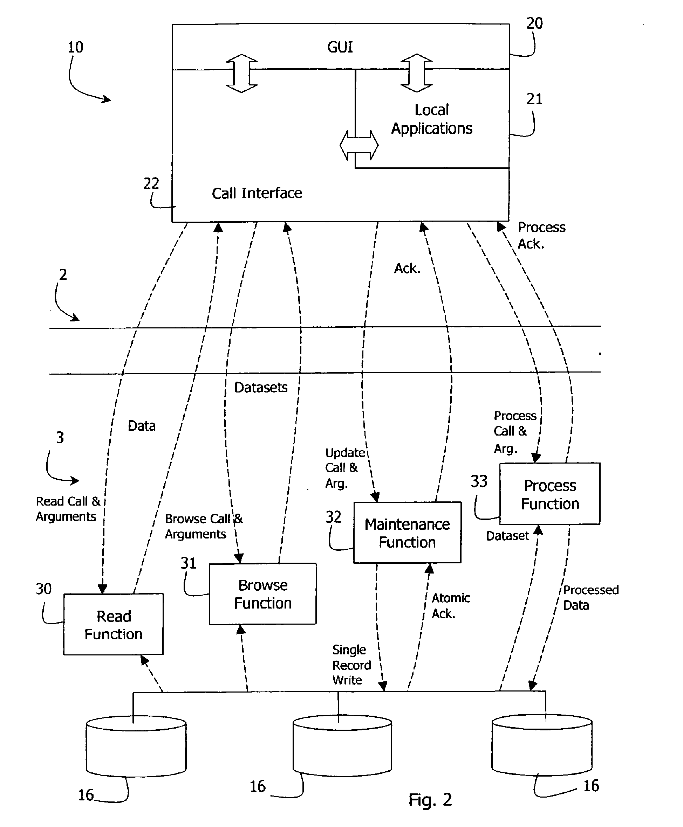

Referring to Fig. 2 each client computer 10 is programmed at the software level with a graphical user interface (GUI) 20, applications 21, and a call interface 22. Within the database functions 15 one function from each of the four categories is illustrated, namely:-
a read function 30;
a browse function 31;
a maintenance function 32; and
a process function 33.

The various functions are best described by way of their operations, as follows. A user may, for example, be a bank official dealing with customers either directly or via telephone at a call centre. The user activates the local applications 21 using the GUI 20 in a typical manner for operations such as spreadsheet or word processing. Thus, for example, he or she may generate reports or documentation with the benefit of powerful state-of-the-art applications. However data manipulation functions of standard PC operating systems and applications are redundant in the client computers 10. Instead, each client computer 10 comprises high-level functions in a call interface 22 which generate calls for the database functions 15. These calls identify the required database function category and include at least one argument specifying a parameter value. Also, the database functions 15 are more powerful than heretofore as they not only perform the low-level database interaction operations of conventional database functions, but they also perform higher-level operations. These higher-level operations include interpreting the call interface calls, performing both complex and simple operations, and communicating replies back to the call interfaces 22.

The call interfaces 22 comprise a number of common procedures which are defined without a database interface, but which provide access to the database server 3 from within these common procedures. The client software is segmented so that any database interaction has been removed from the GUI and is contained strictly within the call interface. The local applications 21 provide common functionality to the GUI 20, but are independent of database considerations.

In addition, another aspect is that the database functions 15 are grouped into categories as described above. The allowed operations of the database functions of each category are well-defined and consistent within the system 1.

All read functions 30 are confined to reading only one database record, and they can not lock the record. All browse functions 31 are confined to reading multiple records and also can not lock the records. All maintenance functions 32 can only perform writes to a single record, and they can perform a record lock only on that single record. Finally, all process functions 33 are confined to:-
activating only upon a call from a client call interface 22;
operate in batch mode on a full dataset, in which all data of the dataset is retrieved, processed, and the processed data written back; and
lock all records of the dataset only during the processing.

Referring again to Fig. 2, the call interface 22 transmits a read call with an argument to a read function 30. An example would be gathering information for a user to decide to cancel a cheque. The current cheque information would be read in a read only fashion to allow the user to decide whether the cheque should be cancelled.

The read function 30 does not lock the relevant record, it only reads data and an update tag from the record and transmits them back to the call interface 22. The tag may, for example, be SYS, Dec. 30 2001, 3.37PM,1. In this tag "SYS" is the identifier of the last user to update the record, in this example an automatic system update. The date and time are of the last update, and the "1" value is a value of a serial number which is incremented with every update to the record. The date and time stamp fields are only ever updated / added by the maintenance functions 32.

The call interface 22 directly passes the data and tag values to the relevant GUI 20 or local application 21. These values are stored by the GUI 20 or local application 21 and are required to be subsequently passed back to the call interface 22 whenever any database action is requested.

A call to a browse function 30 includes an argument specifying multiple data records. As for the read function 30, the data and tags are read and passed back without any record locking. Of course, in this case a full dataset is passed back, including data and appended tags.

A call to a maintenance function 32 has an argument specifying a data record to be updated with a write operation and the value to be written. An example of such a call is updating fields on a customer record to reflect changes in address information. The maintenance function 32 may insert new data, in which case the call interface 22 provides default tags, or updating data using tag values and a unique primary key. In the latter case, if the data is the same as was read from the database, then the function 32 will lock the record and the update will be successful. If the data has been changed then the function 32 will not perform the requested update and a fail notification is returned to the call interface 22. This is detected by the maintenance function 32 because the tags are different. The tags being different indicates that another client computer 10 has updated the record in the intervening period. Thus, the basis on which a requesting client computer (10) requested the update has changed since it received the data from the read function 30, and a "write fail" helps to preserve data integrity.

In more detail, the following is an example of a call for a maintenance function 32.

"CoExecute (DmBranchesMaint 1, 1, 'KBS BankName', 'SYS', 'Dec 30 2001 3:37PM', 1, 'JC')"
in which:-
"CoExecute" activates the communications layer 2 to perform a transfer to the database server 3,
"DmBranchesMaint" is the name of the maintenance function 32,
"1" is the primary key identifying uniquely the record,
"1" is the branch number (data),
"KBS BankName" is the new value of the description (data),
"SYS" is the last client to update, as read previously by the read function 30,
"Dec 30 2001 3:37PM" is the last updated date, as read previously by the read function 30,
"1" is the serial as read previously by the read function 30, and
"JC" identifies the new (current) 10 client generating the call.

### The maintenance function DMBranchesMaint then performs:

UPDATE Table
SET Branch= 1
   BranchName = 'KBS BankName'
   AudUser = 'JC'
   AudDate = GetDate()
   AudSerial = AudSerial + 1
WHERE PriimaryKey = 1
AND AudUser = 'SYS'
AND AudDate = 'Dec 30 2001 3:37PM'
AND AudSerial = 1

In this example the "SET" parameters are used to perform a write, only if the tag values in the record exactly match those of the "WHERE" statement, i.e. SYS, Dec. 30 2001, and 3:37 PM. It will be noted from the "SET" statement that the new tag values in the record following the update will indicate that the last update user was "JC", the date and time are those of the current system, and the serial number is incremented by 1.

Because the "SET" and "WHERE" statements are included in the one operation the update is atomic, it only occurs if the "WHERE" values match those of the record.

Calls to the process functions 33 are much less frequent than those to the other database functions 30, 31, and 32. This is because they arise only when a client computer 10 requires batch processing for a dataset of multiple records. An example would be activation of a new car loan, where the process of activation could spawn up to 50 financial transactions. All of the records in the dataset are locked during the processing. However, this has little impact on the system 1 as a whole because such processing is relatively infrequent (much of the financial data associated with the application results from end-of-day functions, which are run in single user mode). Atomicity of the process functions 33 is achieved using begin transaction / commit transaction functions on the database.

It will be appreciated that the client computers 10 provide a wide range of data/document processing operations as requested via the GUI 20. In addition they achieve the real time database access required for the transaction processing environment without actually performing the operations themselves. They only need to generate calls to database functions in selected categories for database access. Because the full range of database interaction operations are performed locally at the database server 3 in the manner described, these operations are much more coordinated and involve considerably less record locking than heretofore. For example, the prior approach involved locking during a user dialogue, thus leading to concurrency problems and potential deadlock scenarios. The invention also provides a clearly defined architecture that allows for a consistent approach to the maintenance of data and transaction processing. This allows new functionality to be produced without compromising the structure already defined within the application.
As new applications or GUI functionality are added, it is only required that they use the call interface 22.

The invention is not limited to the embodiments described but may be varied in construction and detail.

## Claims

1. A real time transaction processing system comprising:
a client layer (1) comprising a plurality of client computers (10) programmed with a graphical user interface (20), with local applications (21) to execute data processing operations locally, and with functions to perform data manipulation operations in communication with a server (3);
a communications layer (2), and
a database server (3) comprising stored database tables (16) and database functions (15) comprising means for communicating with the client computers (10);
**characterised in that**,
each client computer (10) comprises, at the software level, a call interface (22) comprising means for receiving data manipulation requests from the graphical user interface (20) and from the local applications (21), for generating database function call signals each identifying a database function category and at least one database record, and for transmitting said calls via the communications layer (2) to the database server (3);
wherein, within the client computers (10), all database function interactions are performed by the call interface (22) and not by the graphical user interface (20) or the local applications (21);
the call interfaces (22) comprise a plurality of common procedures which are defined without a database interface;
the database functions (15) are grouped according to the following categories:-
a read category,
a browse category,
a maintenance category, and
a process category;
database functions (30) of the read category are confined to performing only:-
read database access,
access to only a single database record, and
leaving an unlocked record unlocked;
database functions (31) of the browse category are confined to performing only:-
read database access, and
leaving accessed unlocked database records unlocked;
database functions (32) of the maintenance category are confined to performing only:-
access to only a single database record,
locking an unlocked database record only when performing a write, and immediately unlocking the record when the write is complete, and
confirming a write operation only if all steps for atomicity of the write operation have been completed; and
database functions (33) of the process category are confined to performing only:-
accessing a plurality of unlocked database records and locking all of the records, and immediately processing the records after retrieval, and immediately unlocking the records after writing processed data to the records;
wherein the read functions (30) and the browse functions (31) each comprise means for reading record tag values together with record data, and for transmitting the tag values to a requesting client computer (10);
wherein the call interface comprises means for inserting in a call to the maintenance function a tag value identifying the requesting client computer (10) and said record tag values as read previously by the read or browse database functions;
and wherein each maintenance function comprises means for:-
receiving said record tag values in a client call interface (22) call signal, said values being for the last update known to the calling client computer (10),
performing a write operation to the record only if the record tag values are the same as those received in the call, and
transmitting a write fail signal to the client call interface (22) if the tags are different;
wherein each maintenance function comprises means for writing the calling client computer identifier tag value to the record when updating a record; and
wherein each maintenance function comprises means for writing a tag value indicating current date and time to a record during an update.

2. A system as claimed in claim 1, wherein each maintenance function comprises means for incrementing a counter in a stored database record tag upon performance uf a write operation to the record.

3. A system as claimed in any preceding claim, wherein each client computer (10) comprises means for associating a unique primary key identifying a record to be updated, and for including said key in a call to a maintenance function for an update.

4. A system as claimed in any preceding claim, wherein each maintenance function comprises means for performing a record update in a single operation having an instruction specifying the update to be performed and an instruction setting a condition of ensuring tag values in the record match those received in the call from the call interface.

5. A computer program product comprising software code for performing operations of a real time transaction processing system as claimed in any preceding claim when executing on a digital computer.

## Patentansprüche

1. Echtzeit-Transaktionsverarbeitungssystem, das Folgendes umfasst:
eine Client-Schicht (1), die mehrere Client-Computer (10) umfasst, die mit einer grafischen Benutzeroberfläche (20) programmiert werden, mit lokalen Anwendungen (21) zum lokalen Ausführen von Datenverarbeitungsoperationen und mit Funktionen zum Ausführen von Datenmanipulationsoperationen in Kommunikation mit einem Server (3);
eine Kommunikationsschicht (2), und
einen Datenbankserver (3), der gespeicherte Datenbanktabellen (16) und Datenbankfunktionen (15) umfasst, die Mittel zum Kommunizieren mit den Client-Computern (10) beinhalten;
**dadurch gekennzeichnet, dass**:
jeder Client-Computer (10) auf der Software-Ebene eine Anrufschnittstelle (22), die Mittel zum Empfangen von Datenmanipulationsanforderungen von der grafischen Benutzeroberfläche (20) und von den lokalen Anwendungen (21) umfasst, zum Erzeugen von Datenbankfunktionsanrufsignalen, die jeweils eine Datenbankfunktionskategorie und wenigstens einen Datenbank-Datensatz identifizieren, und zum Senden der genannten Anrufe über die Kommunikationsschicht (2) zum Datenbankserver (3) umfasst;
wobei in den Client-Computern (10) alle Datenbankfunktionsinteraktionen von der Anrufschnittstelle (22) und nicht von der grafischen Benutzeroberfläche (20) oder den lokalen Anwendungen (21) ausgeführt werden;
die Anrufschnittstellen (22) mehrere gemeinsame Prozeduren umfassen, die ohne eine Datenbankschnittstelle definiert sind;
die Datenbankfunktionen (15) nach den folgenden Kategorien gruppiert sind:
eine Lesekategorie,
eine Suchkategorie,
eine Wartungskategorie, und
eine Prozesskategorie;
Datenbankfunktionen (30) der Lesekategorie so begrenzt sind, dass sie lediglich Folgendes ausführen:
Lesezugriff auf eine Datenbank,
Zugriff nur auf einen einzigen Datenbank-Datensatz, und
Ungesperrtlassen eines ungesperrten Datensatzes;
Datenbankfunktionen (31) der Suchkategorie so begrenzt sind, dass sie nur Folgendes ausführen:
Lesezugriff auf eine Datenbank, und
Ungesperrtlassen ungesperrter Datenbank-Datensätze, auf die zugegriffen wird;
Datenbankfunktionen (32) der Wartungskategorie so begrenzt sind, dass sie nur Folgendes ausführen:
Zugreifen auf einen einzigen Datenbank-Datensatz,
Sperren eines ungesperrten Datenbank-Datensatzes nur dann, wenn ein Schreibvorgang ausgeführt wird, und sofortiges Entsperren des Datensatzes, wenn der Schreibvorgang komplett ist, und
Quittieren einer Schreiboperation nur dann, wenn alle Schritte für Atomizität der Schreiboperation abgeschlossen sind; und
Datenbankfunktionen (33) der Prozesskategorie so begrenzt sind, dass sie nur Folgendes ausführen:
Zugreifen auf mehrere ungesperrte Datenbank-Datensätze und Sperren aller Datensätze und sofortiges Verarbeiten der Datensätze nach dem Abrufen und sofortiges Entsperren der Datensätze nach dem Schreiben von verarbeiteten Daten auf die Datensätze;
wobei die Lesefunktionen (30) und die Suchfunktionen (31) jeweils Mittel zum Lesen von Datensatzetikettenwerten zusammen mit Datensatzdaten und zum Senden der Etikettenwerte zu einem anfordernden Client-Computer (10) umfassen;
wobei die Anrufschnittstelle Mittel umfasst, um in einen Anruf an die Wartungsfunktion einen Etikettenwert, der den anfordernden Client-Computer (10) identifiziert, und die genannten Datensatzetikettenwerte einzufügen, die zuvor von den Lese- und Suchdatenbankfunktionen gelesen wurden;
und wobei jede Wartungsfunktion Mittel umfasst zum:
Empfangen der genannten Datensatzetikettenwerte in einem Anrufsignal der Client-Anrufschnittstelle (22), wobei die genannten Werte für das letzte dem anrufenden Client-Computer (10) bekannte Update sind,
Ausführen einer Schreiboperation auf den Datensatz nur dann, wenn die Datensatzetikettenwerte dieselben sind wie die, die in dem Anruf empfangen wurden, und
Senden eines Write-Fail-Signals zur Client-Anrufschnittstelle (22), wenn sich die Etiketten unterscheiden;
wobei jede Wartungsfunktion Mittel zum Schreiben des Kennungsetikettenwertes des anrufenden Client-Computers auf den Datensatz beim Aktualisieren eines Datensatzes umfasst; und
wobei jede Wartungsfunktion Mittel zum Schreiben eines Etikettenwertes, der die/das aktuelle Datum und Uhrzeit anzeigt, auf einen Datensatz während einer Aktualisierung umfasst.

2. System nach Anspruch 1, wobei jede Wartungsfunktion Mittel zum Inkrementieren eines Zählers in einem gespeicherten Datenbank-Datensatzetikett nach dem Ausführen einer Schreiboperation an dem Datensatz umfasst.

3. System nach einem der vorherigen Ansprüche, wobei jeder Client-Computer (10) Mittel zum Assoziieren eines eindeutigen Primär-Keys umfasst, der einen zu aktualisierenden Datensatz identifiziert, und zum Einbeziehen des genannten Keys in einen Anruf an eine Wartungsfunktion für ein Update.

4. System nach einem der vorherigen Ansprüche, wobei jede Wartungsfunktion Mittel zum Ausführen eines Datensatz-Updates in einer einzigen Operation mit einem Befehl umfasst, der das auszuführende Update vorgibt, und einem Befehl, der eine Bedingung stellt, die gewährleistet, dass Etikettenwerte in dem Datensatz mit denen übereinstimmen, die in dem Anruf von der Anrufschnittstelle empfangen wurden.

5. Computerprogrammprodukt, das Software-Code zum Ausführen von Operationen eines Echtzeit-Transaktionsverarbeitungssystems nach einem der vorherigen Ansprüche beim Ausführen auf einem digitalen Computer umfasst.

## Revendications

1. Un système de traitement de transactions en temps réel comprenant :
une couche client (1) comprenant une pluralité d'ordinateurs clients (10) programmés avec une interface utilisateur graphique (20), avec des applications locales (21) destinées à exécuter localement des opérations de traitement de données, et avec des fonctions destinées à exécuter des opérations de manipulation de données en communication avec un serveur (3),
une couche de communications (2), et
un serveur de base de données (3) comprenant des tables de base de données conservées en mémoire (16) et des fonctions de base de données (15) comprenant un moyen de communiquer avec les ordinateurs clients (10),
**caractérisé en ce que**,
chaque ordinateur client (10) comprend, au niveau logiciel, une interface d'appel (22) comprenant un moyen de recevoir des demandes de manipulation de données de l'interface utilisateur graphique (20) et des applications locales (21), de générer des signaux d'appels de fonction de base de données, chacun d'eux identifiant une catégorie de fonction de base de données et au moins un enregistrement de base de données, et de transmettre lesdits appels via la couche de communications (2) au serveur de base de données (3),
où, à l'intérieur des ordinateurs clients (10), toutes les interactions de fonction de base de données sont exécutées par l'interface d'appel (22) et non par l'interface utilisateur graphique (20) ou les applications locales (21),
les interfaces d'appel (22) comprennent une pluralité de procédures communes qui sont définies sans une interface de base de données,
les fonctions de base de données (15) sont groupées selon les catégories suivantes :
une catégorie lecture,
une catégorie navigation,
une catégorie maintenance, et
une catégorie traitement ;
les fonctions de base de données (30) de la catégorie lecture sont limitées à l'exécution uniquement de :
l'accès à la base de données en lecture,
l'accès à uniquement un seul enregistrement de base de données, et
le fait de laisser un enregistrement déverrouillé en l'état déverrouillé,
les fonctions de base de données (31) de la catégorie navigation sont limitées à l'exécution uniquement de :
l'accès à la base de données en lecture, et
le fait de laisser les enregistrements de base de données déverrouillés accédés en l'état déverrouillé,
les fonctions de base de données (32) de la catégorie maintenance sont limitées à l'exécution uniquement de :
l'accès à uniquement un seul enregistrement de base de données,
le verrouillage d'un enregistrement de base de données déverrouillé uniquement lors de l'exécution d'une opération d'écriture, et le déverrouillage immédiat de l'enregistrement lorsque l'opération d'écriture est terminée, et
la confirmation d'une opération d'écriture uniquement si toutes les opérations pour l'atomicité de l'opération d'écriture ont été réalisées, et
les fonctions de base de données (33) de la catégorie traitement sont limitées à l'exécution uniquement de :
l'accès à une pluralité d'enregistrements de base de données déverrouillées et le verrouillage de tous les enregistrements, et le traitement immédiat des enregistrements après récupération, et le déverrouillage immédiat des enregistrements après l'écriture de données traitées dans les enregistrements.
où les fonctions de lecture (30) et les fonctions de navigation (31) comprennent chacune un moyen de lire des valeurs d'étiquette d'enregistrement conjointement avec des données d'enregistrement, et de transmettre les valeurs d'étiquette à un ordinateur client demandeur (10),
où l'interface d'appel comprend un moyen d'insérer dans un appel vers la fonction de maintenance d'une valeur d'étiquette identifiant l'ordinateur client demandeur (10) et lesdites valeurs d'étiquette d'enregistrement telles que lues antérieurement par les fonctions de base de données de lecture et de navigation,
et où chaque fonction de maintenance comprend un moyen de :
recevoir lesdites valeurs d'étiquette d'enregistrement dans un signal d'appel d'interface d'appel client (22), lesdites valeurs étant pour la dernière mise à jour connue de l'ordinateur client appelant (10),
exécuter une opération d'écriture dans l'enregistrement uniquement si les valeurs d'étiquettes de l'enregistrement sont les mêmes que celles reçues dans l'appel, et
transmettre un signal d'échec d'écriture à l'interface d'appel client (22) si les étiquettes sont différentes,
où chaque fonction de maintenance comprend un moyen d'écrire la valeur d'étiquette de l'identifiant de l'ordinateur client appelant dans l'enregistrement au moment de la mise à jour d'un enregistrement, et
où chaque fonction de maintenance comprend un moyen d'écrire une valeur d'étiquette indiquant la date et l'heure courantes dans un enregistrement au moment d'une mise à jour.

2. Un système selon la Revendication 1, où chaque fonction de maintenance comprend un moyen d'incrémenter un compteur dans une étiquette d'enregistrement de base de données conservée en mémoire lors de l'exécution d'une opération d'écriture vers l'enregistrement.

3. Un système selon l''une quelconque des Revendications précédentes, où chaque ordinateur client (10) comprend un moyen d'associer une clé primaire unique identifiant un enregistrement à mettre à jour, et d'inclure ladite clé dans un appel à une fonction de maintenance en vue d'une mise à jour.

4. Un système selon l'une quelconque des Revendications précédentes, où chaque fonction de maintenance comprend un moyen d'exécuter une mise à jour d'enregistrement en une seule opération possédant une instruction spécifiant la mise à jour à exécuter et une instruction définissant une condition destinée à garantir que les valeurs d'étiquette de l'enregistrement correspondent à celles reçues dans l'appel provenant de l'interface d'appel.

5. Un programme informatique comprenant du code logiciel destiné à exécuter des opérations d'un système de traitement de transactions en temps réel selon l'une quelconque des Revendications précédentes lorsqu'il est exécuté sur un ordinateur numérique.
